# EUROPEAN PATENT APPLICATION

(11) **EP 2 500 563 A2**
(43) Date of publication of application: **19.09.2012**
(21) Application number: 12159789.2
(22) Date of filing: 16.03.2012
(51) Int. Cl.: F03D 9/00

(54) **Cooling device used for cooling wind turbine generator system as well as wind turbine generator system**

(30) Priority: 18.03.2011 CN 201110066311
(71) Applicant: Sinovel Wind Group Co., Ltd, Haidian District, Beijing 100872 (CN)
(72) Inventor: Huang, Qiang, Haidian District, Beijing 100872 (CN); Lu, Jizhuang, Haidian District, Beijing 100872 (CN); Liu, Wenguang, Haidian District, Beijing 100872 (CN)
(74) Representative: Ehnis, Tobias

(57) **Abstract**

The present invention discloses a cooling device for cooling a wind turbine generator system as well as the wind turbine generator system, wherein the cooling device comprises: a first cooling circuit used for sealing and cycling a first coolant and comprising a first inflow pipeline, one or more heat-absorbing units, a first outflow pipeline and a heat dissipation unit which are in fluid communication with each other in sequence, and the heat dissipation unit being connected to the first inflow pipeline and thus forming the first cooling circuit to be circulatory, and a second cooling circuit used for cooling the heat dissipation unit of the first cooling circuit, a second coolant being adopted by the second cooling circuit and taking away the heat in the heat dissipation unit, so that a first gaseous coolant in the heat dissipation unit is transformed into a first liquid coolant. The cooling device can relatively better cool the wind turbine generator system, with the advantages of strong cooling capacity and convenient maintenance. Furthermore, it can guarantee the wind turbine generator system to be operated stably and efficiently.

## Description

### FIELD OF THE TECHNOLOGY

The present invention relates to the technical field of a wind turbine generator, and in particular to a cooling device used for cooling a wind turbine generator system as well as a wind turbine generator system.

### BACKGROUND

Currently, a megawatt-class wind turbine generator system usually produces relatively high heat during operation, thus working efficiency of the wind turbine generator system is adversely affected. In order to ensure that the wind turbine generator system can be operated normally, efficiently and safely, the main heat-generating devices, such as an exciter, a generator, a frequency converter, a transformer, and so on, should be cooled reasonably.

A natural air cooling method can be adopted by the prior wind turbine generator system below the megawatt-class. Forced air cooling method or water cooling method is usually adopted by the megawatt-class or above wind turbine generator systems. However, as the unit capacity of the wind turbine generator system becomes bigger and bigger, the heat produced from the generator, the exciter and the frequency converter during the operation of the wind turbine generator system will be increased. The traditional air cooling method is very difficult to meet the heat dissipation requirement of the wind turbine generator system, which further affects working efficiency and service life of the wind turbine generator system. However, during the course of cooling the megawatt-class wind turbine generator system with the adoption of the water cooling method, water can be easily leaked and causes conductive accidents. Furthermore, the wind turbine generator system adopting water cooling method needs very complicated maintenance. Therefore, how to cool the wind turbine generator system with large power becomes the technical problem which needs to be solved currently.

### SUMMARY

The present invention provides a cooling device used for cooling a wind turbine generator system as well as a wind turbine generator system. The cooling device can relatively better cool the wind turbine generator system, with the advantages of high cooling capacity and convenient maintenance. Furthermore, it can guarantee the wind turbine generator system to be operated stably and efficiently.

In one aspect, the present invention provides a cooling device used for cooling a wind turbine generator system. The cooling device comprises:

a first cooling circuit, which seals and cycles a first coolant and comprises: a first inflow pipeline, one or more heat-absorbing units, a first outflow pipeline and a heat dissipation unit which are in fluid communication with each other in sequence, the heat dissipation unit being connected to the first inflow pipeline and thus forming the first cooling circuit for circulating the first coolant; and

a second cooling circuit, which is used for cooling the heat dissipation unit of the first cooling circuit, a second coolant being adopted by the second cooling circuit and taking away the heat in the heat dissipation unit, so that a first gaseous coolant in the heat dissipation unit is transformed into a first liquid coolant.

According to another aspect of the present invention, a wind turbine generator system is also provided, comprising a wind turbine generator, as well as a cooling device used for cooling the wind turbine generator system according to any one embodiment described in the present invention. The heat-absorbing unit of the cooling device is positioned in a nacelle of the wind turbine generator system. The second cooling circuit of the cooling device is positioned in a cooling chamber of the wind turbine generator system. The nacelle and the cooling chamber are separated from each other, for example, by a separation wall, optionally the separation can be a separation sealed against dust.

With arrangement of two cooling circuits, the cooling device used for cooling the wind turbine generator system in the present invention can efficiently cool the wind turbine generator system and guarantee that a generator in the wind turbine generator system can be operated stably and efficiently. Compared with a natural cooling method and a water cooling method in the prior art, the cooling capacity of the wind turbine generator system provided in the present invention is relatively strong; the maintenance cost of the cooling device provided in the present invention is relatively low, thus further facilitating operation efficiency of the generator and fully guaranteeing the wind turbine generator system to be operated stably and reliably.

### BRIEF DESCRIPTION OF THE DRAWINGS

In order to describe the embodiments of the present invention or the technical solution in the prior art more clearly, drawings needed for describing the embodiments or the prior art will be introduced in brief hereinafter. Obviously, what are described in the following drawings are only some embodiments of the present invention and the ordinary skill in the art can obtain other embodiments according to the drawings without any creative work.

FIG.1 is a structural schematic diagram of a cooling device used for cooling a wind turbine generator system according to an embodiment of the present invention.

FIG.2 is a structural schematic diagram of a cooling chamber of the cooling device according to an embodiment of the present invention.

Description of main reference signs:

| | | |
|---|---|---|
| 1. Blade Wheel | 2. Main Shaft | 3. generator |
| 4. Boosting Pump | 5. Main Frame | 6. Frequency Converter |
| 7. Exciter | 8. First Liquid Coolant | 9. First Gaseous Coolant |
| 10. First Cool Air | 11. Spraying Unit | 12. Coiled-Pipe Device |
| 13. Water Baffle | 14. Air Baffle | 15. Heat Exchange Unit |
| 16. Second Cool Air | 17. Centrifugal Fan | 18. Header Tank |
| 19. Filtering Device | 20. Rainwater Collection Device | 21. Circulating WaterPump |
| 22.Water-Level Adjusting Device | 23. Hot Wind | 24.Cooling Chamber |

### DETAILED DESCRIPTION

In order to make the purposes, technical solution and advantages of the embodiments of the present invention clearer, the technical solution in the embodiments of the present invention will be clearly and completely described hereinafter according to the drawings of the present invention. Obviously, those described here are not all but only a part of embodiments of the present invention. On the basis of the embodiments of the present invention, all other embodiments obtained by the ordinary skill in the art without any creative work should fall in the protection scope of the present invention.

Embodiment 1

The Embodiment 1 of the present invention provides a cooling device used for cooling the wind turbine generator system, wherein the wind turbine generator system to be cooled by the cooling device generally comprises a wind turbine generator, an exciter and a frequency converter which are electrically connected with the wind turbine generator, as well as a cooling device used for cooling the wind turbine generator, the exciter and the frequency converter. The cooling device also can be used for cooling other heat-generating elements such as a gear case and so on in the wind turbine generator system. Here, a cooling object of the cooling device is not limited.

The cooling device provided in Embodiment 1 comprises a first cooling circuit and a second cooling circuit, wherein a first coolant is sealed and cycled in the first cooling circuit. Furthermore, the first cooling circuit comprises a first inflow pipeline, one or more heat-absorbing units, a first outflow pipeline and a heat dissipation unit which are in fluid communication with each other in sequence, and in addition, the heat dissipation unit is connected to the first inflow pipeline, thus recycling the first coolant back to the first inflow pipeline so as to form the first sealed cycling cooling circuit. In an embodiment, one heat-absorbing unit is associated with one component of the wind turbine generator system, such as the generator, the exciter, a frequency converter, or other part that needs to be cooled. When more than one heat-absorbing units are used for cooling more than one components, the heat-absorbing units can be arranged in parallel between the first inflow pipeline and the first outflow pipeline. Optionally, two or more heat-absorbing units can be arranged in series between the first inflow pipeline and the first outflow pipeline.

The second cooling circuit is used for cooling the heat dissipation unit of the first cooling circuit. A second coolant is adopted by the second cooling circuit and takes away the heat in the heat dissipation unit, so that a first gaseous coolant in the heat dissipation unit is transformed into a first liquid coolant (the first gaseous coolant here can be transformed into the first liquid coolant partially or entirely). The heat-absorbing units of the first cooling circuit are positioned in the nacelle of the wind turbine generator system, for example, they can respectively be positioned in the inner parts of the wind turbine generator, the exciter and the frequency converter connected with the wind turbine generator, or in the inner parts of other units of the wind turbine generator system which need to be cooled. At least three heat-absorbing units are preferably provided in an embodiment. The three heat-absorbing units are respectively positioned in the inner part of the wind turbine generator, the exciter and the frequency converter connected with the wind turbine generator, respectively.

Particularly, the heat dissipation unit in the embodiment can be a coiled-pipe device or a wing-shaped structure, similar to the structure of a heat dissipation pipe in a central air conditioning in the prior art, etc. The first coolant used in the embodiment can be C₅H₂F₁₀ or Freon, and the second coolant used in the second cooling circuit can be liquid water.

Furthermore, a boosting pump used for increasing pressure of the first coolant can be arranged between the first inflow pipeline and the heat-absorbing units so as to guarantee relatively better circulation of the first liquid coolant and the first gaseous coolant which are in the first cooling circuit, so that the heat of the wind turbine generator system can be relatively better dissipated.

Generally, the first inflow pipeline, one or more heat-absorbing units and the first outflow pipeline of the first cooling circuit are positioned in the nacelle of the wind turbine generator system (not indicated in the drawings). The heat dissipation unit and the second cooling circuit are positioned in the cooling chamber.

In the embodiment, the second cooling circuit may comprise: a spraying unit, which is used for uniformly distributing a second liquid coolant for the heat dissipation unit; a heat exchange unit, which is positioned under the spraying unit and used for collecting the second liquid coolant; a centrifugal fan, which is positioned at the same side of the spraying unit and the heat exchange unit, wherein the centrifugal fan can be communicated with air; a water baffle, which is added between the centrifugal fan and the spraying unit; and another water baffle, which is added between the centrifugal fan and the heat exchange unit, these water baffles can be passed through with the hot air and a second gaseous coolant. One side of the spraying unit, which is deviated from the heat dissipation unit, is communicated with air. One side of the heat exchange unit, which is deviated from the centrifugal fan, is provided with an air passage into which air can be entered. Furthermore, air communication places of areas of the spraying unit, the heat exchange unit and the centrifugal fan are separated from each other. Preferably, the air communication places of the areas of the spraying unit, the heat exchange unit and the centrifugal fan are separated from each other with an air baffle. A lower part of the heat exchange unit is communicated with a header tank, and a circulating water pump for circulating the second liquid coolant is arranged between the header tank and the spraying unit.

Further, the second cooling circuit also comprises a filtering device which is positioned between the header tank and the circulating water pump and used for filtering the second coolant and/or a rainwater collection device which is outside the cooling chamber and communicated with the header tank. Preferably, a water-level adjusting device used for adjusting the water level can be arranged over the header tank.

The above cooling device used for cooling the wind turbine generator system can be realized by two cooling circuits, for example, the first cooling circuit and the second cooling circuit in the independent cooling chamber, so that the wind turbine generator system can be efficiently cooled and the generator in the wind turbine generator system can be operated stably and efficiently. Compared with the natural cooling method and water cooling method of the prior art, cooling capacity of the wind turbine generator system with the cooling device provided in the present invention is strong. The cooling device has convenient maintenance and further increases operation efficiency of the generator, thus guaranteeing fully the stability and reliability of the wind turbine generator system.

As mentioned above, according to the embodiment of the present invention, specifically, the second cooling circuit can be positioned in the cooling chamber. The second cooling circuit comprises the spraying unit used for uniformly distributing the second liquid coolant for the heat dissipation unit, and the heat exchange unit which is positioned under the spraying unit and used for collecting the second liquid coolant. A two-stage cooling system is formed through the first cooling circuit and the second cooling circuit, thus efficiently improving cooling efficiency.

Based on the above technical solution, a second coolant flow passage is formed between the spraying unit and the heat exchange unit. One side of the second coolant flow passage is communicated with air to form a cool air inlet, and the other side is communicated with air to form a hot air outlet; and the centrifugal fan is arranged at the hot air outlet and used for controlling the air flowing in the second coolant flow passage to cool the second coolant. The forced air cooling of the second coolant is carried out through the abovementioned technical solution, so that its temperature can be decreased as soon as possible and can be recycled. The forced air cooling can be realized by the centrifugal fan, thus increasing cooling effect.

In order that recycle is realized, the lower part of the heat exchange unit is communicated with the header tank, and the circulating water pump for circulating the second liquid coolant is arranged between the header tank and the spraying unit.

Preferably, the water baffle is added between the centrifugal fan and the spraying unit, and another water baffle is added between the centrifugal fan and the heat exchange unit. These water baffles are used for blocking the second liquid coolant and being passed through with the second gaseous coolant. The second liquid coolant is avoided to influence operation of the centrifugal fan.

Embodiment 2

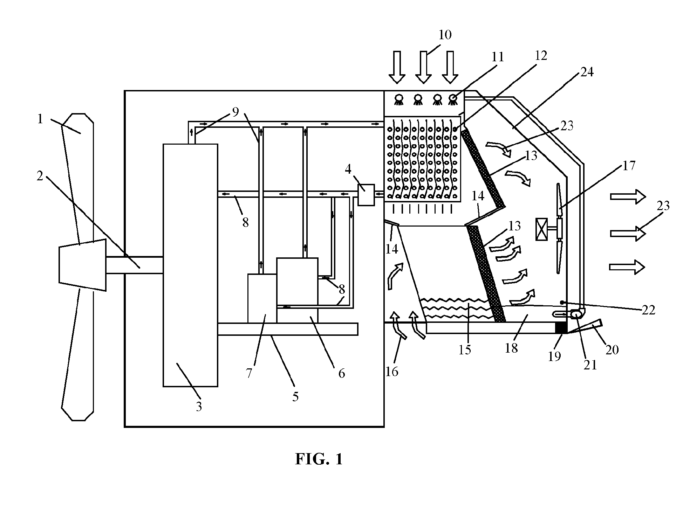

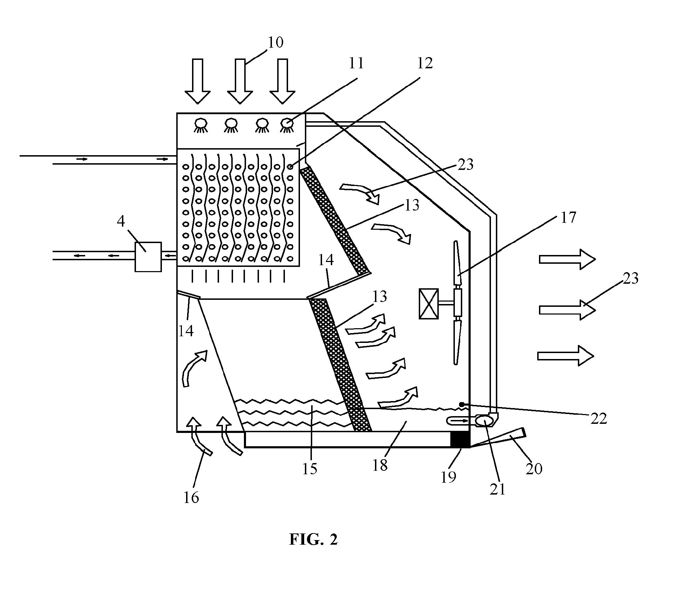

Referring to FIGS. 1 and 2, FIG.1 is a structural schematic diagram of a cooling device used for cooling a wind turbine generator system according to an embodiment of the present invention. FIG.2 is a structural schematic diagram of a cooling chamber of the cooling device according to an embodiment of the present invention. The wind turbine generator system being adaptive to the cooling device in the embodiment mainly comprises a blade wheel 1, a main shaft 2, a generator 3, a main frame 5, an exciter 7, a frequency converter 6 and a cooling chamber 24. The wind turbine generator system is divided into two chamber bodes: one is a nacelle, and the other is the cooling chamber 24, wherein the blade wheel 1, the main shaft 2, the generator 3, the main frame 5, the exciter 7 and the frequency converter 6 are positioned in the nacelle. Furthermore, the blade wheel 1 passes through the main shaft 2 provided in the nacelle and extends out of the nacelle. The nacelle and the cooling chamber 24 are separated from each other by a wall. The cooling device in the cooling chamber 24 is used for cooling relevant devices/equipment in the nacelle, so as to guarantee the wind turbine generator system to be operated efficiently. Specifically, the blade wheel 1 is connected with the generator 3 through the main shaft 2, so that mechanical energy is converted into electrical energy by the generator 3. The generator 3, the exciter 7 and the frequency converter 6 are positioned on the main frame 5. When the wind turbine generator system is operated, a rotor of the generator 3 is excited by the exciter 7. The generator 3 is directly driven by the blade wheel 1 through the main shaft 2, thus generating electric current. Power-supply frequency is adjusted automatically by the frequency converter 6, thus guaranteeing to meet grid-connected requirement of the user. Generally, all of the devices in the nacelle of the wind turbine generator system are under a sealed state. Therefore, the damage to the wind turbine generator system due to the invasion of outside sand bed and salt fog can be efficiently avoided. Generally, the cooling chamber 24 of the wind turbine generator system is positioned at the tail of the wind turbine generator system. More details are found in FIGS 1 and 2. Except that the first coolant in the cooling chamber 24 flows and performs heat exchange in a first outflow pipeline and a first inflow pipeline which connect the nacelle with the cooling chamber 24, the cooling chamber 24 and the nacelle are separated from each other.

The cooling device of the abovementioned wind turbine generator system comprises a first cooling circuit and a second cooling circuit. Specifically, the cooling cycle of the first cooling circuit is performed among the generator 3, the frequency converter 6, the exciter 7 and the cooling chamber 24. The cooling cycle of the second cooling circuit is performed between the cooling chamber 24 and outer air. A heat-exchange design with phase-change of a cooling medium exists in two cooling cycle circuits (that is, the first cooling circuit and the second cooling circuit). Therefore, compared with traditional wind cooling and water cooling systems, the cooling capacity of the present invention is multiplied.

In the first cooling circuit, most of the coolant flowing in the first inflow pipeline is the first liquid coolant 8, and most of the coolant flowing in the first outflow pipeline is the first gaseous coolant 9, so that the first liquid coolant 8 can fully absorb heat in the heat-absorbing unit (not indicated in the drawing) in the inner part of the generator 3 and is further gasified into the first liquid coolant 9. The first gaseous coolant 9 then reaches the heat dissipation unit, i.e., a coiled-pipe device 12, through the first outflow pipeline. The first gaseous coolant 9 in the coiled-pipe device 12 is cooled via the second cooling circuit outside the coiled-pipe device 12, so that the first gaseous coolant 9 in the coiled-pipe device 12 is liquefied into the first liquid coolant 8, flows back into the first inflow pipeline again and thus forming cycle course of the first cooling circuit.

Specifically, the low-temperature liquid cooling medium, i.e., the first liquid coolant 8, outflows from the first inflow pipeline of the cooling chamber 24, and split-flows in the heat-absorbing units (not indicated in the drawings) in the inner parts of the units needing heat dissipation, such as the generator 3, the frequency converter 6, the exciter 7, and so on. After the heat produced by the generator 3, the frequency converter 6 and the exciter 7 is absorbed by the liquid cooling medium, the temperature of the liquid cooling medium, i.e., the temperature of the first liquid first coolant, reaches boiling point. A large quantity of heat in the generator 3, the frequency converter 6 and the exciter 7 is further absorbed by the first coolant which is hence gasified into the high-temperature gaseous coolant, that is, the first gaseous coolant 9. The high-temperature gaseous cooling medium flows circularly in the first outflow pipeline, reaches the heat dissipation unit, that is, the coiled-pipe device 12, in the cooling chamber 24, and is cooled by the second cooling circuit outside the coiled-pipe device 12; therefore, the first gaseous coolant 9 is liquefied into the first liquid coolant 8, and is continuously cycled to cool the heat produced in the cooling generator 3, the frequency converter 6 and the exciter 7. The heat in the generator 3, the exciter 7 and the frequency converter 6 can be relatively better cooled through the abovementioned first cooling circuit.

Preferably, a boosting pump 4 used for increasing pressure of the first liquid coolant 8 is arranged between the first inflow pipeline and the heat-absorbing unit, so as to guarantee relatively better circulation of the first gaseous coolant 9 and the first liquid coolant 8 which are in the first cooling circuit. Particularly, the first coolant used in the embodiment can be the environmental fluorocarbon coolant (for example, HFC-4310), which is colorless and transparent liquid with the molecular formulae of C₅H₂F₁₀. Of course, the first coolant also can be Freon coolant. C₅H₂F₁₀ is used preferably as the first coolant in the embodiment.

The abovementioned first cooling circuit can be operated under relatively low pressure and temperature, so as to guarantee that the leakage quantity of the first gaseous coolant in each pipeline/unit of the first cooling circuit is minimized. As the cooling capacity of the first coolant in the first cooling circuit is strong, the winding temperature of the generator 3 can be stably controlled to be relatively low level, with the advantages of increasing in operation efficiency and the service life of the generator. Furthermore, overload capacity of the generator can be relatively better increased. The abovementioned first coolant is fluorocarbon compound with low boiling point (about 60 degrees). The fluorocarbon compound has characteristics of non poison, pollution free, non corrosiveness and high insulation as well as performances of fire protection and arc extinction.

The second cooling circuit is positioned in the cooling chamber according to the embodiment. The coolant commonly used in the second cooling circuit is water with relatively strong heat-absorbing capacity. Therefore, water is used as the second coolant to describe the second cooling circuits as follows. The second cooling circuit comprises: a spraying unit 11, which is used for uniformly distributing the liquid water for the coiled-pipe device 12; a heat exchange unit 15, which is positioned under the spraying unit 11 and used for collecting the liquid water, and a centrifugal fan 17, which is positioned at the same side of the spraying unit 11 and the heat exchange unit 15. The centrifugal fan 17 can be communicated with air. Water baffles 13 are respectively added between the centrifugal fan 17 and the spraying unit 11 as well as between the centrifugal fan 17 and the heat exchange unit 15. Gas-phase water, that is, water vapor, can pass through the water baffle 13. One side of the spraying unit 11, which is deviated from the coiled-pipe device 12 (as shown in the area above the spraying unit 11), is communicated with air. That is, the first cool air 10 enters into the outer surface of the coiled-pipe device 12 and dissipates the heat in the first coolant, the liquid water and the water vapor. One side (as shown in the drawing) of the heat exchange unit 15, which is deviated from the centrifugal fan 17, is partially provided with an air passage into which air can be entered, thus a second cool air 16 enters into the heat exchange unit 15 and dissipates the heat in the liquid water and the water vapor. Furthermore, air communication places of areas of the spraying unit 11, the heat exchange unit 15 and the centrifugal fan 17 are separated from each other. An air baffle is preferably used for the separation (as shown in FIG. 2). The lower part of the heat exchange unit 15 is communicated with the header tank 18, and a circulating water pump 21 for circulating the liquid water is arranged between the header tank 18 and the spraying unit 11. A filtering device 19 for filtering the liquid water is arranged between the header tank 18 and the circulating water pump 21. Of course, a rainwater collection device 20 communicated with the header tank 18 can also be arranged outside the cooling chamber 24, thus collecting the rainwater outside the wind turbine generator system for recycling. Preferably, a water-level adjusting device 22 used for adjusting the water level is also arranged over the header tank 18, so as to guarantee the cooling device in the embodiment to be relatively better recycled.

Specifically, the cycle course of the second cooling circuit can be: the first high-temperature gaseous coolant 9 cycles into the coil-pipe device 12 in the cooling chamber 24 through the first outflow pipeline and performs heat exchange with the liquid water sprayed out of the spraying unit 11 outside of the coiled-pipe device 12 and a first cool air from the outside of the cooling chamber 24. Hence, the first gaseous coolant 9 in the inner part of the coiled-pipe device 12 is gradually liquefied into the first liquid coolant 8 and then the cycle course of the first cooling circuit is performed. Meanwhile, wind force of the centrifugal fan 17 facilitates the liquid water sprayed from the spraying unit 11 to wholly cover the outer surface of the circled-pipe device 12, thus enhancing the heat exchange efficiency of the coiled-pipe device 12. The temperatures of the sprayed liquid water and the first cool air are increased after they absorb heat. At this time, partial liquid water is changed into water vapor; furthermore, a large quantity of latent heat of gasification is taken out during the water evaporation course. The hot air and the water vapor of which the temperatures are increased pass through the water baffle 13 and are discharged with guidance of the centrifugal fan 17. That is, the hot air and the water vapor which absorb the heat are directly discharged out of the cooling chamber 24 via the water baffle 13 by the centrifugal fan 17. In additions, the high-temperature liquid water, which absorbs heat and has the increased temperature, enters the heat exchange unit 15 after passing through the outer surface of the coiled-pipe device 12. The high-temperature liquid water in the heat exchange unit 15 is cooled by a stream of cool air, that is, the second cool air 16, outside the cooling chamber 24. After the temperature of the liquid water in the heat exchange unit 15 is decreased, the liquid water is collected by the header tank 18 communicated with the heat exchange unit 15, and sent to the spraying unit 11 again by the circulating water pump 21 for the cooling cycle.

The inner part of the cool chamber 24 in the embodiment has the rainwater collection device 20 for collecting quantity-needed rainwater. After the rainwater is simply cleansed, it enters the header tank 18 according to the control by the water-level adjusting device 22 to supplement moisture evaporated and lost in the air. Compared with the prior art, the cooling chamber 24 in the embodiment can save much cost. Furthermore, the centrifugal fan 17 used in the embodiment has the advantages of relatively low power, compact structure, good dissipation heat effect and energy saving. Meanwhile, the damage to the wind turbine generator system due to the invasion of outside sand bed and salt fog of the cooling chamber 24 can be avoided. The concrete structures of various devices used in the abovementioned embodiments can be referred to the structures of various devices with the same functions in the prior art. The present invention shall not limit the structures of various concrete devices.

The wind turbine generator system provided in the embodiments of the present invention comprises the wind turbine generator and also the cooling device provided by any embodiment of the present invention for cooling the wind turbine generator system. The heat-absorbing units of the cooling device are positioned in the nacelle of the wind turbine generator system, and the second cooling circuit of the cooling device is positioned in the cooling chamber of the wind turbine generator system. The nacelle and the cooling chamber are separated from each other.

As for the abovementioned technical solutions, as the nacelle and the cooling chamber are separated from and independent of each other, not only the devices in the nacelle of the wind turbine generator system can be cooled through the first cooling circuit, but also the cooling efficiency of the first cooling circuit is increased through the second cooling circuit in the cooling chamber arranged independently. Furthermore, the impact performed on the devices in the nacelle with the adoption of water cooling and forced air cooling methods is not needed to be worried about. The wind turbine generator system can be guaranteed to be operated stably. The separating method of the nacelle and the cooling chamber can be carried out through separated walls which are formed of a shell body, plate materials, etc. The first inflow pipeline and the first outflow pipeline of the first cooling circuit pass through the walls.

Finally, it should be noted that the above examples are merely provided for describing the technical solutions of the present invention, but not intended to limit the present invention. It should be understood by the ordinary skill in the art that although the present invention is described in detail with reference to the foregoing embodiments, modifications can be made to the technical solutions described in the foregoing embodiments, or equivalent replacements can be made to some technical features in the technical solutions, without the essence of corresponding technical solutions departing from the scope of the embodiments of the present invention.

## Claims

1. A cooling device used for cooling a wind turbine generator system, comprising:
a first cooling circuit, which seals and cycles a first coolant and comprises a first inflow pipeline, one or more heat-absorbing units, a first outflow pipeline and a heat dissipation unit which are in fluid communication with each other in sequence, the heat dissipation unit being connected to the first inflow pipeline and thus forming the first cooling circuit for circulating the first coolant; and
a second cooling circuit, which is used for cooling the heat dissipation unit of the first cooling circuit, a second coolant being adopted by the second cooling circuit and taking away the heat in the heat dissipation unit, so that a first gaseous coolant in the heat dissipation unit is transformed into a first liquid coolant.

2. The cooling device of claim 1, wherein the heat-absorbing units are respectively positioned in the inner parts of the wind turbine generator, an exciter connected with the wind turbine generator and/or a frequency converter connected with the wind turbine generator.

3. The cooling device of claim 1, wherein the heat dissipation unit is a coiled-pipe device.

4. The cooling device of claim 1, wherein a boosting pump used for increasing pressure of the first coolant is arranged between the first inflow pipeline and the heat-absorbing units.

5. The cooling device of claim 1, wherein the first coolant is C₅H₂F₁₀.

6. The cooling device of any one of claims 1-5, wherein the second cooling circuit is positioned in a cooling chamber;
the second cooling circuit comprises: a spraying unit, which is used for uniformly distributing a second liquid coolant for the heat dissipation unit; a heat exchange unit, which is positioned under the spraying unit and used for collecting the second liquid coolant, a centrifugal fan, which is positioned at the same side of the spraying unit and the heat exchange unit and can be communicated with air; a water baffle, which is added between a centrifugal fan and the spraying unit; and another water baffle, which is added between the centrifugal fan and the heat exchange unit, these water baffles being passed through with the a second gaseous coolant;
wherein one side of the spraying unit, which is deviated from the heat dissipation unit, is communicated with air, one side of the heat exchange unit, which is deviated from the centrifugal fan, is provided with a vent into which air can be entered, and air communication places of areas of the spraying unit, the heat exchange unit and the centrifugal fan are separated from each other; and
a lower part of the heat exchange unit is communicated with a header tank, and a circulating water pump for circulating a second liquid coolant is arranged between the header tank and the spraying unit.

7. The cooling device of any one of claims 1-5, wherein
the second cooling circuit is positioned in a cooling chamber; and the second cooling circuit comprises a spraying unit used for uniformly distributing a second liquid coolant for the heat dissipation unit, and a heat exchange unit which is positioned under the spraying unit and used for collecting the second liquid coolant.

8. The cooling device of claim 7, wherein
a second coolant flow passage is formed between the spraying unit and the heat exchange unit; and
one side of the second coolant flow passage is communicated with air to form a cool air inlet, and the other side is communicated with air to form a hot air outlet; a centrifugal fan is arranged at the hot air outlet and used for controlling the air flowing in the second coolant flow passage to cool the second coolant.

9. The cooling device of claim 8, wherein
a water baffle is added between the centrifugal fan and the spraying unit, another water baffle is added between the centrifugal fan and the heat exchange unit, and these water baffles are used for blocking a second liquid coolant and being passed through with the a second gaseous coolant.

10. The cooling device of claim 7, wherein
a lower part of the heat exchange unit is communicated with a header tank, and a circulating water pump for circulating a second liquid coolant is arranged between the header tank and the spraying unit.

11. The cooling device of any one of claims 6-10, wherein the second coolant is water.

12. The cooling device of claim 10 or 11, wherein
the second cooling circuit further comprises a filtering device which is positioned between the header tank and the circulating water pump and used for filtering the second coolant; and/or
a rainwater collection device which is outside the cooling chamber and communicated with the header tank.

13. The cooling device of claim 12, wherein the air communication places of the areas of the spraying unit, the heat exchange unit and the centrifugal fan are separated from each other with an air baffle.

14. The cooling device of claim 10 or 13, wherein a water-level adjusting device used for adjusting the water level is arranged over the header tank.

15. A wind turbine generator system, comprising a wind turbine generator, wherein it further comprises the cooling device used for cooling the wind turbine generator system of any one of claims 1-14, the heat-absorbing units are positioned in a nacelle of the wind turbine generator system, the second cooling circuit of the cooling device is positioned in a cooling chamber of the wind turbine generator system, and the nacelle and the cooling chamber are separated from each other.
